# EUROPÄISCHE PATENTSCHRIFT

(11) **EP 1 768 811 B1**
(45) Veröffentlichungstag und Bekanntmachung des Hinweises auf die Patenterteilung: **14.09.2011**
(21) Anmeldenummer: 05756924.6
(22) Anmeldetag: 05.07.2005
(51) Int. Cl.: B23D 25/14, B23D 35/00

(54) **VERFAHREN UND VORRICHTUNG ZUM KALIBRIEREN VON SAUMSCHNEIDERN UND MESSERKÖPFEN**
METHOD AND DEVICE FOR CALIBRATING SEAM CUTTERS AND BLADE-CARRIER HEADS
PROCEDE ET DISPOSITIF DE CALIBRAGE DE COUPE-BORDS ET DE TETES PORTE-LAMES

(30) Priorität: 21.07.2004 DE 102004035417
(43) Veröffentlichungstag der Anmeldung: 04.04.2007
(73) Patentinhaber: SMS Siemag AG, 40237 Düsseldorf (DE)
(72) Erfinder: ABEL, Oliver, 40724 Hilden (DE)
(74) Vertreter: Klüppel, Walter
(86) Internationale Anmeldenummer: PCT/EP2005/007244
(87) Internationale Veröffentlichungsnummer: WO 2006/007973

(56) Entgegenhaltungen:
- US-A- 3 460 228

## Beschreibung

Die Erfindung betrifft ein Verfahren zum Kalibrieren von Saumschneidern und diesen zugeordneten Messerköpfen mit schräg zur Saumlaufrichtung auf diesen angeordneten Messern, sowie eine Vorrichtung zur Durchführung des Verfahrens, wobei der Saumschneider eine axial feststehende Messerwelle sowie eine, mittels einer Messerspalt-Verstellvorrichtung axial verschiebbare Messerwelle aufweist, und der erste Messerkopf in axialer Richtung fest und gegen Verdrehen auf der axial feststehenden Messerwelle gesichert ist.

Bei der Herstellung von Metallbändern in kontinuierlich laufenden Bandanlagen werden die Ränder des Bandes mit Scheren besäumt. Es ist bekannt, den anfallenden Saum mittels Saumwicklern aufzuwickeln oder durch Schrottpressen zusammenzupressen. Nachteilig ist dabei, dass während des Wechselns eines Saumbundes oder während des Pressvorgangs der nachfolgende Saum nicht be- bzw. verarbeitet werden kann. Daher wurden Saumschneider entwickelt, die den Saum kontinuierlich in kleine Stücke schneiden.

Derartige Saumschneider arbeiten als Trommelschere, deren mindestens ein Messerpaar ständig umläuft und hierbei den Saum zerschneidet. Für den Schnitt kämmen die Messer aneinander vorbei. Dieser Schneidvorgang wird in Abhängigkeit des zu schneidenden Materials mit unterschiedlich großem Spalt durchgeführt. Der Messerspalt lässt sich mittels einer Messerspalt-Verstellvorrichtung während des Schneidens einstellen. Dadurch wird der Schneidvorgang optimiert und der Verschleiß der Messer minimiert.

Die Messerspalt-Verstellvorrichtung weist eine Verschiebeeinheit auf, die auf die axial verschiebbare Messerwelle wirkt. Da die Messer nicht rechtwinklig sondern schräg zur Saumlaufrichtung auf dem jeweiligen Messerkopf angeordnet sind, wird durch eine axiale Verschiebung des Messerkopfes der Messerspalt verstellt.

Es hat sich jedoch herausgestellt, dass durch die Fertigungstoleranzen der Saumschneider die Messerspalte nicht immer gleich sind. Die Fertigungstoleranzen müssen aufwendig ausgeglichen werden.

Auch die gattungsgemäße US 3,460,228 offenbart eine Messerkopfwechsel- und -kalibriervorrichtung, bei der jedoch die Fertigungstoleranzen ebenfalls aufwendig ausgeglichen werden müssen.

Der Erfindung liegt daher die Aufgabe zugrunde, ein Verfahren gemäß dem Anspruch 1 zum Kalibrieren von Saumschneidern und diesen zugeordneten Messerköpfen sowie eine Vorrichtung gemäß dem Anspruch 7 zur Durchführung des Verfahrens aufzuzeigen, mittels dessen bzw. mittels der die Fertigungstoleranzen ausgeglichen werden können.

Zur Lösung dieser Aufgabe wird vorgeschlagen, dass der erste Messerkopf in axialer Richtung fest und gegen Verdrehen auf der axial feststehenden Messerwelle gesichert wird, dass der zweite Messerkopf auf der axial verschiebbaren, spielfrei mit der axial feststehenden Messerwelle in Antriebsverbindung stehenden Messerwelle derart aufgesetzt wird, dass die Messerköpfe in einer Ebene fluchten, dass die Messerspalt-Verstelleinrichtung auf eine Nullstellung, aus der die axial verschiebbare Messerwelle nur in einer Richtung bewegbar ist, gebracht wird, dass der zweite Messerkopf durch Drehen auf der Messerwelle so eingestellt wird, dass die Messer der beiden Messerköpfe einen Spalt gleich "Null" einnehmen und dass der zweite Messerkopf in dieser Position axial und gegen Verdrehen auf der Messerwelle gesichert wird.

Dadurch, dass bei in Nullstellung der axial verschiebbaren Messerwelle die Messerköpfe bei einem Null-Messerspalt derart aufeinander ausgerichtet sind, dass sie fluchten, ist einerseits der Saumschneider kalibriert. Andererseits ist aber auch das Messer auf dem Saumschneider kalibriert, so dass auch nach Entfernen und ggf. Nachschleifen des Messers eine Neujustierung nicht notwendig ist.

Von Vorteil ist, wenn die Sicherung der axialen Position der Messertrommeln auf den Messerwellen durch Verstiften und / oder Verschrauben von Anschlagringen auf der jeweiligen Messerwelle erfolgt. Dadurch, dass ein Anschlagring mit der Messerwelle verbunden wird, bleibt die axiale Justierung auch bestehen, selbst wenn die Messertrommeln von der Messerwelle abgezogen werden.

Es hat sich bewährt, dass die Verdrehsicherung der Messerköpfe durch Verstiften und / oder Verschrauben von Justierringen an den Messerköpfen erfolgt, wobei mindestens ein Mitnehmer des jeweiligen Justierrings mit dem Mitnehmer-Gegenstück am jeweiligen Anschlagring derart spielfrei in Kontakt gebracht worden sind, dass ein Verdrehen der Ringe gegeneinander unterbunden ist.

Dadurch werden die Ringe zueinander in eine ganz bestimmte Stellung gebracht. Wird in dieser Stellung der Justierring mit dem Messerkopf verschraubt, so ergibt sich eine reproduzierbare Einstellung der Messerköpfe auf dem Saumschneider.

Es hat sich bewährt, dass die Messerköpfe durch Betätigung einer Hydraulikkupplung und / oder durch Befestigen von Endscheiben auf den Messerwellen axial gesichert werden.

Die Mitnahme der Messerköpfe erfolgt über den mit der Messerwelle fest verbundenen Anschlagring und den mit dem Messerkopf fest verbundenen Justierring. Die Ringe sind über Mitnehmer positioniert. Damit die Ringe nicht voneinander getrennt werden, hat sich die Hydraulikkupplung, die den Messerkopf auf der Messerwelle festlegt bzw. die Endscheibe, die den Messerkopf gegen den Anschlagring drückt, bewährt.

Von Vorteil ist, dass die mit den fixierten Justierringen versehenen Messerköpfe vom Saumschneider lösbar und zum Kalibrieren weiterer Saumschneider auf diese aufschiebbar sind, wobei die jeweiligen Anschlagringe der weiteren Saumschneider mit den bereits justierten Justageringen der Messerköpfe in Kontakt bringbar und bei auf Null-Spalt eingestellten Messerköpfen anschließend auf den Messerwellen festsetzbar sind.

Damit lassen sich mit einem Messerkopfsatz mehrere Saumschneider kalibrieren. Werden dann noch weitere Messerkopfsätze, wie nach Anspruch 6 vorgeschlagen, kalibriert, können die Messerkopfsätze beliebig auf kalibrierten Saumschneidern ausgewechselt werden, ohne das es zu Nachjustierungen kommen muss.

Für die axiale Justierung der Anschlagringe (5, 6) und damit der Messerköpfe (13, 14) hat sich der Einsatz eines Justierbügels (20) bewährt.

Die Erfindung wird anhand einer Zeichnung näher erläutert.

Dabei zeigt:
- Figur 1: in perspektivischer Ansicht einen Saumschneider und
- Figur 2: die perspektivische Ansicht eines Messerkopfes.

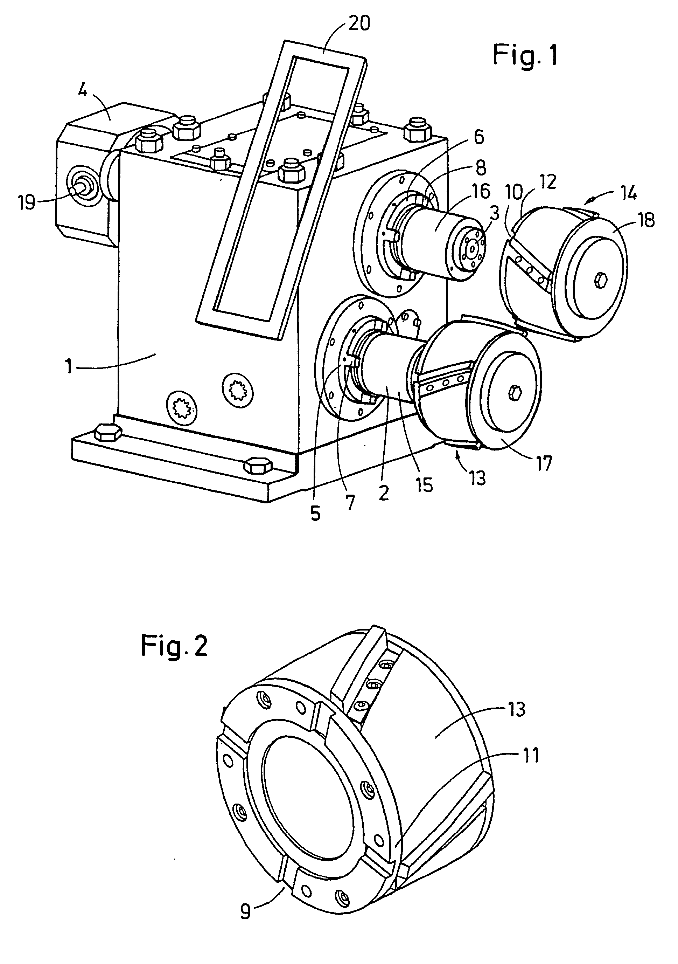

Figur 1 zeigt einen Saumschneider 1 mit einer unteren, feststehenden Messerwelle 2 sowie einer oberen, axial verschiebbaren Messerwelle 3. Die Messerwelle 3 ist über eine Messerspalt-Verstelleinrichtung 4 axial verschieblich einstellbar. Auf den Messerwellen 2, 3 sind Anschlagringe 5, 6 angeordnet. Die Anschlagringe 5, 6 weisen als Mitnehmer Nasen 7, 8 auf, die in als Mitnehmer-Gegenstücke ausgebildete Ausnehmungen 9, 10 von Justierringen 11, 12 der Messerköpfe 13, 14 einzugreifen vermögen. Auf den Messerwellen 2, 3 sind hydraulische Spannelemente 15, 16 angeordnet. Die Messerköpfe 13, 14 können außer über die hydraulischen Spannelemente 15, 16 auch über Endscheiben 17, 18 auf den Messerwellen 2, 3 befestigt werden.

Die Kalibrierung des Saumschneiders 1 und der Messerköpfe 13, 14 verläuft wie folgt:
Auf der feststehenden unteren Messerwelle wird der Anschlagring 5 festgelegt. Der Justierring 11 wird am Messerkopf 13 befestigt und der Messerkopf 13 wird auf die Messerwelle geschoben und dort mittels des Spannelementes 15 und / oder der Endscheibe 17 festgelegt.

Die Messerspalt-Verstelleinrichtung 14 wird an ihrem Einstellelement 19 auf "Null" justiert. Damit kann über das Einstellelement 19 die Messerwelle 3 nur noch in einer Richtung, zum Auseinanderfahren des Messerspalts bewegt werden. Nunmehr wird der Anschlagring 6 sowie der Justierring 12 und der Messerkopf 13 auf die obere Messerwelle 3 geschoben. Mittels eines Justierbügels 20 wird der lose Messerkopf 15 auf den feststehenden Messerkopf 13 fluchtend ausgerichtet. Nunmehr wird der Anschlagring 6 mit dem Justierring 12 in Wirkverbindung gebracht und gegen den Messerkopf 14 verschoben. In dieser Position wird der Anschlagring 6 mit der Messerwelle 3 fest verbunden. Im Anschluss daran wird der Messerkopf 14 so lange verdreht, bis die Messer des Messerkopfs 13 und die Messer des Messerkopfs 14 einen Spalt "Null" eingenommen haben. In dieser Position wird nunmehr der Justierring 12 fest mit dem Messerkopf 14 verbunden.

Nunmehr können die Messerköpfe 13, 14 vom Saumschneider 1 entfernt und auf einen weiteren Saumschneider aufgesetzt werden, bei dem die Kalibrierung wieder so vorgenommen wird, wie beim Saumschneider 1. Lediglich der Justierring 12 ist bereits festgesetzt, so dass auch der Anschlagring 6, nachdem die Messerköpfe 13, 14 in eine Flucht gebracht worden sind, nur in einer bestimmten Eingriffsposition mit dem Justierring 12 auf der oberen Messerwelle des weiteren Saumschneiders festgelegt werden kann. Damit lassen sich eine große Anzahl von Saumschneidem, alle in der gleichen Weise kalibrieren.

Auf diesen Saumschneidern stehen die Anschlagringe 5 und 6 fest. Nunmehr können neue Messerkopfsätze auf die bereits kalibrierten Saumschneider aufgeschoben werden. Werden die Messer auf einen Spalt "Null" eingestellt, so können die jeweiligen Justierringe 12, 13 an den Messerköpfen 13, 14 festgelegt werden. Damit passen die neu justierten Messerköpfe auf sämtliche bereits kalibrierten Saumschneider.

### Bezugszeichenübersicht

- 1.: Saumschneider
- 2.: Messerwelle
- 3.: Messerwelle
- 4.: Messerspalt-Verstelleinrichtung
- 5.: Anschlagring
- 6.: Anschlagring
- 7.: Nase
- 8.: Nase
- 9.: Ausnehmung
- 10.: Ausnehmung
- 11.: Justierring
- 12.: Justierring
- 13.: Messerkopf
- 14.: Messerkopf
- 15.: Spannelement
- 16.: Spannelement
- 17.: Endscheibe
- 18.: Endscheibe
- 19.: Einstellelement
- 20.: Justierbügel

## Patentansprüche

1. Verfahren zum Kalibrieren von Saumschneidern (1) und diesen zugeordneten Messerköpfen (13, 14) mit schräg zur Saumlaufrichtung auf diesen angeordneten Messern, wobei der Saumschneider (1) eine axial feststehende (2) und eine mittels einer Messerspalt-Verstelleinrichtung (4) axial verschiebbare Messerwelle (3) aufweist, und der erste Messerkopf (13) in axialer Richtung fest und gegen Verdrehen auf der axial feststehenden Messerwelle (2) gesichert ist,
**dadurch gekennzeichnet,**
**dass** der zweite Messerkopf (14) auf der axial verschiebbaren, spielfrei mit der axial feststehenden Messerwelle (2) in Antriebsverbindung stehenden Messerwelle (3) derart aufgesetzt wird, dass die Messerköpfe (13, 14) in einer Ebene fluchten,
**dass** die Messerspalt-Verstelleinrichtung (4) auf eine Nullstellung, aus der die axial verschiebbare Messerwelle (3) nur in eine Richtung bewegbar ist, gebracht wird,
**dass** der zweite Messerkopf (14) durch Drehen auf der Messerwelle (3) so eingestellt wird, dass die Messer der beiden Messerköpfe (13, 14) einen Spalt gleich "Null" einnehmen und dass der zweite Messerkopf (14) in dieser Position axial und gegen Verdrehen auf der Messerwelle (3) gesichert wird.

2. Verfahren nach Anspruch 1,
**dadurch gekennzeichnet,**
**dass** die Sicherung der axialen Position durch Verstiften und / oder Verschrauben von Anschlagringen (5, 6) auf den jeweiligen Messerwellen (2, 3) erfolgt.

3. Verfahren nach Anspruch 1 oder 2,
**dadurch gekennzeichnet,**
**dass** die Verdrehsicherung der Messerköpfe (13, 14) durch Verstiften und/oder Verschrauben von Justierringen (11, 12) an den Messerköpfen (13, 14) erfolgt, wobei mindestens ein Mitnehmer (Nase 7, 8) des Justierrings (11, 12) mit dem Mitnehmer-Gegenstück (Ausnehmung 9, 10) am Anschlagring (5, 6) drehfest und spielfrei in Kontakt gebracht worden sind, so dass ein Verdrehen der Ringe (5, 6; 11, 12) gegeneinander unterbunden ist.

4. Verfahren nach einem der Ansprüche 1 bis 3,
**dadurch gekennzeichnet,**
**dass** die Messerköpfe (13, 14) durch Betätigung von Spannelementen (15, 16) und / oder durch Befestigung von Endscheiben (17, 18) auf den Messerwellen (2, 3) axial gesichert werden.

5. Verfahren nach einem der Ansprüche 1 bis 4,
**dadurch gekennzeichnet,**
**dass** die mit den fixierten Justierringen (11, 12) versehenen Messerköpfe (13, 14) vom Saumschneider (1) lösbar und zum Kalibrieren weiterer Saumschneider auf diese aufsteckbar sind, wobei die jeweiligen Anschlagringe mit den fixierten Justierringen in Kontakt bringbar und anschließend bei Messerspalt gleich "Null" auf der Messerwelle festsetzbar sind.

6. Verfahren nach einem der Ansprüche 1 bis 5,
**dadurch gekennzeichnet,**
**dass** auf die mit den fixierten Anschlagringen (5, 6) versehenen Saumschneider (1) weitere Messerköpfe so aufgesteckt werden, dass deren Justierringe spielfrei und mit den Anschlagringen (5, 6) in Kontakt kommen und dass die Justierringe bei einem Messerspalt gleich "Null" an dem jeweiligen Messerkopf fixiert werden.

7. Vorrichtung zum Durchführen des Verfahrens zum Kalibrieren von Saumschneidern (1) nach einem der Ansprüche 1 bis 6. wobei ein Saumschneider (1) eine axial feststehende Messerwelle (2), eine mittels einer Messerspaltverstelleinrichtung (4) axial verschiebbare Messerwelle (3) sowie diesen zugeordneten Messerköpfen (13, 14) mit schräg zur Saumlaufrichtung auf diesen angeordneten Messern aufweist, und
den Messerwellen (2, 3) auf diesen positionierbare, in axialer Richtung und in Drehrichtung arretierbare Anschlagringe (5, 6) zugeordnet sind, **dadurch gekennzeichnet dass** die Anschlagringe (5, 6) mindestens einen Mitnehmer oder Nase (7, 8) aufweisen, dass jedem Messerkopf (13, 14) stirnseitig ein Justierring (11, 12) zugeordnet ist, dass der jeweilige Justierring (11, 12) gegen den Messerkopf (13, 14) verdrehbar ist, dass der jeweilige Justierring (11, 12) an beliebiger Stelle mit dem Messerkopf (13, 14) arretierbar ist, dass der Justierring mindestens eine mit den Mitnehmern oder Nasen (7, 8) zusammenwirkendes Mitnehmer-Gegenstück oder Ausnehmung (9, 10) aufweist und dass ein Justierbügel für eine axiale Justierung der Anschlagringe (5, 6) vorgesehen ist.

## Claims

1. Method of calibrating trimming cutters (1) and knife heads (13, 14), which are associated therewith, with knives arranged on the heads at an inclination with respect to the running direction of the trimming, wherein the trimming cutter (1) comprises a knife shaft (3) which is axially stationary (2) and a knife shaft (2) which is axially displaceable by means of a knife gap adjusting device (4) and the first knife head (13) is fixed in axial direction and secured against rotation on the axially stationary knife shaft (2), **characterised in that** the second knife head (14) is so placed on the axially displaceable knife shaft (3) disposed in drive connection with the axially stationary knife shaft (2) free of play that the knife heads (13, 14) are aligned in a plane, that the knife gap adjusting device (4) is brought into a zero setting from which the axially displaceable knife shaft (3) is movable only in one direction and that the second knife head (14) is so set by turning on the knife shaft (3) that the knives of the two knife heads (13, 14) adopt a gap equal to "zero" and that the second knife head (14) is axially secured in this position and against rotation on the knife shaft (3).

2. Method according to claim 1, **characterised in that** the securing of the axial positions is effected by pinning and/or screw-connection of abutment rings (5, 6) on the respective knife shafts (2, 3).

3. Method according to claim 1 or 2, **characterised in that** the rotational securing of the knife heads (13, 14) is effected by pinning and/or screw-connection of adjusting rings (11, 12) with the knife heads (13, 14), wherein at least one entrainer (lug 7, 8) of the adjusting ring (11, 12) is brought into rotationally fast and play-free contact with the entrainer counter-member (recess 9, 10) at the abutment ring (5, 6) so that rotation of the rings (5, 6; 11, 12) relative to one another is precluded.

4. Method according to any one of claims 1 to 3, **characterised in that** the knife heads (13, 14) are axially secured by actuation of clamping elements (15, 16) and/or by fastening of end washers (17, 18) on the knife shafts (2, 3).

5. Method according to any one of claims 1 to 4, **characterised in that** the knife heads (13, 14), which are provided with the fixed adjusting rings (11, 12), are detachable from the trimming cutter (1) and, for calibration of further trimming cutters, pluggable onto these, wherein the respective abutment rings can be brought into contact with the fixed adjusting rings and subsequently fixable on the knife shaft with knife gap equal to "zero".

6. Method according to any one of claims 1 to 5, **characterised in that** further knife heads can be so plugged onto the trimming cutters (1) provided with the fixed abutment rings (5, 6) that the adjusting rings of the heads are free of play and come into contact with the abutment rings (5, 6) and that the adjusting rings with knife gap equal to "zero" are fixed to the respective knife head.

7. Device for carrying out the method of calibrating trimming cutters (1) according to any one of claims 1 to 6, wherein a trimming cutter (1) comprises a knife shaft (2) which is axially stationary, a knife shaft (3) which is axially displaceable by means of a knife gap adjusting device (4) and knife heads (13, 14), which are associated therewith, with knives arranged on the heads at an inclination to the running direction of the trimming, and abutment rings (5, 6) are associated with the knife shafts (2, 3), the abutment rings being positionable thereon and lockable in axial direction and rotational direction, **characterised in that** the abutment rings (5, 6) comprise at least one entrainer or lug (7, 8), that on adjusting ring (11, 12) is associated with each knife head (13, 14) at the end, that the respective adjusting ring (11, 12) is rotatable relative to the knife head (13, 14), that the respective adjusting ring (11, 12) is lockable with the knife head (13, 14) at any desired position, that the adjusting ring comprises at least one entrainer counter-member or recess (9, 10) co-operating with the entrainers or lugs (7, 8) and that an adjusting bracket for axial adjustment of the abutment rings (5, 6) is provided.

## Revendications

1. Procédé pour le calibrage de rogneurs (1) et des têtes à lames (13, 14) qui y sont associées avec des lames disposées sur celles-ci, en biais par rapport au sens d'avancement du bord, le rogneur (1) présentant un arbre à lames axialement fixe (2) et un arbre à lames (3) pouvant être déplacé axialement au moyen d'un dispositif de réglage (4) de la fente entre les lames, et la première tête à lames (13) étant fixe dans le sens axial et assurée contre la rotation sur l'arbre (2) à lames axialement fixe, **caractérisé**
- **en ce que** la deuxième tête à lames (14) est placée sur l'arbre à lames (3) pouvant être déplacé axialement, assemblé en entraînement, sans jeu, avec l'arbre à lames (2) axialement fixe de manière telle que les têtes à lames (13, 14) s'alignent dans un plan,
- **en ce que** le dispositif de réglage (4) de la fente entre les lames est amené en une position zéro à partir de laquelle l'arbre à lames (3) pouvant être déplacé axialement ne peut être déplacé que dans un sens,
- **en ce que** la deuxième tête à lames (14) est réglée, par rotation sur l'arbre à lames (3) de manière telle que les lames des deux têtes à lames (13, 14) réalisent une fente égale à "zéro" et en ce que la deuxième tête à lames (14) est assurée axialement et contre une rotation sur l'arbre à lames (3) dans cette position.

2. Procédé selon la revendication 1, **caractérisé**
**en ce que** l'assurance de la position axiale est réalisée par un goupillage et/ou un vissage de bagues de butée (5, 6) sur les différents arbres à lames (2,3).

3. Procédé selon la revendication 1 ou 2, **caractérisé**
**en ce que** l'assurance contre la rotation des têtes à lames (13,14) est réalisée par goupillage et/ou vissage de bagues d'ajustement (11,12) sur les têtes à lames (13,14), au moins un tenon d'entraînement (nez 7,8) de la bague d'ajustement (11,12) étant amené en contact, sans pouvoir tourner et sans jeu, avec la contre-pièce de tenon d'entraînement (9,10) sur la bague de butée (5,6) de manière telle qu'une rotation des bagues (5, 6 ; 11, 12) l'une par rapport à l'autre n'est pas possible.

4. Procédé selon l'une quelconque des revendications 1 à 3, **caractérisé**
**en ce que** les têtes à lames (13, 14) sont assurées axialement sur les arbres à lames (2,3) en actionnant des éléments de serrage (15,16) et/ou par fixation de disques d'extrémité (17, 18).

5. Procédé selon l'une quelconque des revendications 1 à 4, **caractérisé**
**en ce que** les têtes à lames (13,14) pourvues des bagues d'ajustement (11,12) fixées peuvent être enlevées du rogneur (1) et d'autres rogneurs peuvent y être placés pour le calibrage, les différentes bagues de butée pouvant être mises en contact avec les bagues d'ajustement fixées et ensuite fixées sur l'arbre à lames à une fente entre les lames valant "zéro".

6. Procédé selon l'une quelconque des revendications 1 à 5, **caractérisé**
**en ce que** d'autres têtes à lames sont placées sur les rogneurs (1) pourvus des bagues de butée (5,6) fixées de manière telle que leurs bagues d'ajustement entrent en contact sans jeu et avec les bagues de butée (5, 6) et en ce que les bagues d'ajustement sont fixées à une fente entre les lames valant "zéro" sur chaque tête à lames.

7. Dispositif pour réaliser le procédé pour le calibrage de rogneurs (1) selon l'une quelconque des revendications 1 à 6, un rogneur (1) présentant un arbre à lames (2) axialement fixe, un arbre à lames (3) pouvant être déplacé axialement au moyen d'un dispositif de réglage (4) de la fente entre les lames ainsi que des têtes à lames (13,14) qui y sont associées avec des lames disposées en biais par rapport au sens de rognage et des bagues de butée (5,6) positionnables sur les arbres à lames (2,3) pouvant être bloquées dans le sens axial et de rotation y étant associées, **caractérisé**
**en ce que** les bagues de butée (5,6) présentent au moins un tenon d'entraînement ou nez (7, 8), en ce que chaque tête à lames (13, 14) est associée, sur sa face frontale, à une bague d'ajustement (11,12), en ce que chaque bague d'ajustement (11,12) peut être tournée contre la tête à lames (13,14), en ce que chaque bague d'ajustement (11, 12) peut être bloquée en n'importe quel endroit avec la tête à lames (13, 14), en ce que la bague d'ajustement présente au moins une contre-pièce de tenon d'entraînement ou un évidement (9,10) interagissant avec les tenons d'entraînement ou les nez (7, 8) et en ce qu'un étrier d'ajustement est prévu pour un ajustement axial des bagues de butée(5, 6).
